# EUROPEAN PATENT APPLICATION

(11) **EP 1 883 262 A1**
(43) Date of publication of application: **30.01.2008**
(21) Application number: 06741935.8
(22) Date of filing: 19.05.2006
(51) Int. Cl.: H04Q 7/38

(54) **SYSTEM AND METHOD FOR CALLING FIXED TERMINAL VIA MOBILE COMMUNICAT,4 c ION NETWORK**

(30) Priority: 19.05.2005 CN 200510070837
(71) Applicant: Huawei Technologies Co., Ltd., Longgang District Shenzhen Guangdong 518129 (CN)
(72) Inventor: WANG, Sheng Huawei Administration Building, Shenzhen Guangdong 518129 (CN)
(74) Representative: Körber, Martin Hans
(86) International application number: PCT/CN2006/001047
(87) International publication number: WO 2006/122511

(57) **Abstract**

The present invention discloses a system and method for calling a fixed terminal via a mobile communication network. The method includes: setting a database server which stores a relationship between terminal identification (ID) and terminal type as well as another relationship between a fixed terminal and routing information of a switching unit connected by the fixed terminal; on receipt of a call initiated to the called terminal, triggering and putting through the call by the calling switching unit to the database server; returning the routing information of the called switching unit by the database server to the calling switching unit, after determining the called terminal is a fixed terminal; putting through the call by the calling switching unit to the called switching unit based on the routing information; initiating a call to the called terminal by the called switching unit.

## Description

### Field of the Technology

The present invention relates to mobile communication technologies, and more particularly, to a method for calling a fixed terminal via a mobile communication network and a system thereof.

### Background of the Invention

The existing mobile service operator can be transformed into an integrative service operator in a way that a fixed terminal is connected via the existing mobile communication network. In comparison with the case of simultaneously operating a fixed communication network and a mobile communication network, connecting a fixed terminal via an existing mobile communication network extends the service scope of the mobile service operators at a low cost, and wins them the competitive advantages over the operators providing a fixed communication service.

Mobile Station International Integrated Services Digital Network Number (MSISDN) is assigned to the fixed terminal, and the fixed terminal is connected to the mobile communication network via a switching unit. Because the processes are similar when a fixed terminal is taken as a caller or a mobile terminal is taken as a caller, no descriptions will be given in detail hereinafter. In the mobile communication network, when a call is put through to the called terminal, the call is routed based on a temporarily Mobile Station Roaming Number (MSRN) of the called terminal assigned by the Visitor Location Register (VLR) of the called terminal instead of being routed based on the MSISDN. According to that MSRN, the call can be routed to the switching unit visited by the called terminal and be put through to the called terminal via the switching unit. Because there is no registration process when the fixed terminal is turned on and the location thereof is fixed, no VLR is existed for the fixed terminal. Therefore, the major problem to be solved is how to deal with the situations when the fixed terminal is taken as a called terminal.

In the present mobile communication network, the call initiated to a fixed terminal is implemented by pre-registering the Call Forwarding Unconditional (CFU) in the Home Location Register (HLR) of the fixed terminal, in other words, the call initiated to a fixed terminal is implemented by using the forwarding service. However, in the processes of the forwarding service, a CFU bill will be generated at the calling switching unit. However, the CFU bill is in essence not generated by user forwarding and thereby cannot be taken as a basis for charging. Therefore, the charging system, on receipt of a bill provided by the calling switching unit, has to get rid of the CFU bill therein. Therefore an additional cooperation of the charging system is needed.

Further, there is a strict restraint for the forwarding time with regard to some mobile communication networks. When the forwarding time is limited to 1 or even a smaller number and the fixed terminal has registered the CFU in HLR, a call forwarded to the fixed terminal by other terminals will not be successfully put through due to the limitation of the forwarding time. Therefore, the success rate of service thereof is reduced.

### Summary of the Invention

Embodiments of the present invention provide a system for calling a fixed terminal via a mobile communication network, including a calling terminal, a called terminal, a calling switching unit, a called switching unit and a database server, in which the called terminal is a fixed terminal;
the calling switching unit, configured to trigger and put through a call initiated to the called terminal from the calling terminal to the database server, put through the call to the called switching unit based on routing information of the called switching unit;
the database server, configured to determine the called terminal is a fixed terminal based on a stored relationship between terminal Identification, ID, and terminal type, and after determining the called terminal is a fixed terminal, configured to return routing information of the called switching unit to the calling switching unitbased on a stored relationship between the fixed terminal and routing information of the called switching unit connected by the fixed terminal; and
the called switching unit, configured to initiate a call to the called terminal.

The calling switching unit is a Gateway Mobile Switching Center, GMSC, in the mobile communication network, or a Mobile Switching Center, MSC, in the mobile communication network; the called switching unit is an MSC in the mobile communication network, or a switch which connects the mobile communication network.

The database server is a Home Location Register, HLR, of the called terminal.

The database server is a Service Control Point, SCP, in the home Intelligent Network, IN, of the called terminal.

The database server includes an HLR of the called terminal and an SCP in the home IN of the called terminal;
the HLR of the called terminal, configured to order the calling switching unit to trigger and put through the call to the home SCP of the called terminal after determining that the called terminal is a fixed terminal based on the stored relationship between the terminal ID and terminal type; and
the home SCP of the called terminal, configured to return the routing information of the called switching unit to the calling switching unit based on the stored relationship between the fixed terminal and the routing information of the called switching unit connected by the fixed terminal.

The routing information includes preset routing prefix of the called switching unit, or a combination of the preset routing prefix of the called switching unit and the called terminal ID.

Embodiments of the present invention also disclose a method for calling a fixed terminal via a mobile communication network, including:
triggering and putting through the call to a database server, by a calling switching unit, on receipt of a call initiated to a called terminal;
after determining that the called terminal is a fixed terminal based on a stored relationship between terminal identification, ID, and terminal type, returning to the calling switching unit, by the database server, routing information of the called switching unit connected by the called terminal based on a relationship stored in the database server between the called terminal and routing information of the called switching unit accessed by the called terminal;
putting through the call to the called switching unit by the calling switching unitbased on the routing information of the called switching unit returned by the database serve; and
initiating a call to the called terminal, by the called switching unit.

The database server is the Home Location Register, HLR, of the called terminal.

The database server is the Service Control Point, SCP, in the home Intelligent Network, IN, of the called terminal, and
the process of triggering and putting through the call by the calling switching unit to the database server includes:
triggering and putting through an IN service to the home SCP of the called terminal by the calling switching unit based on the called terminal ID carried in the call.

The called terminal ID is fragmented number information of the called terminal ID.

The relationship between the terminal ID and the terminal type is determined by the fragmented number information of the terminal ID.

The process of determining the relationship between the terminal ID and the terminal type by the fragmented number information of the terminal ID includes: if the fragmented number information of the terminal ID is in line with a preset rule for fragmented number of the fixed terminal, the terminal corresponding to the terminal ID is a fixed terminal; and
if the fragmented number information of the terminal ID isn't in line with preset rules for fragmented number of the fixed terminal, the terminal corresponding to the terminal ID is a mobile terminal.

The relationship between the terminal ID and the terminal type is determined by length of the terminal ID.

The process of determining the relationship between the terminal ID and the terminal type by length of the terminal ID includes: if the length of the terminal ID is in line with a preset rule for length of the fixed terminal, the terminal corresponding to the terminal ID is a fixed terminal; and
if the length of the terminal ID isn't in line with preset rules for length of the fixed terminal, the terminal corresponding to the terminal ID is a mobile terminal.

The relationship between the terminal ID and the terminal type is determined by a combination of the fragmented number information of the terminal ID and length of the terminal ID.

The process of determining the relationship between the terminal ID and the terminal type by a combination of the fragmented number information in the terminal ID and length of the terminal ID includes:
if length of the terminal ID is both in line with preset rules for the fragmented number and length of the fixed terminal ID, the terminal type corresponding to the terminal ID is a fixed terminal; and
if at least one of the fragmented number information and length of the terminal ID isn't in line with preset rules for the fragmented number and length of the fixed terminal ID, the terminal type corresponding to the terminal ID is a mobile terminal.

The database server includes the HLR of the called terminal and the home SCP of the called terminal;
the HLR stores the relationship between the terminal ID and the terminal type;
the SCP stores the relationship between the called terminal and the routing information of the called switching unit connected by the called terminal; and
the process of triggering and putting through the call by the calling switching unit to the database server includes:
   triggering and putting through the call by the calling switching unit to the HLR;
   the process of determining by the database server the called terminal is a fixed terminal includes:
      determining, by the HLR, whether the called terminal is a fixed terminal based on the stored relationship between the terminal ID and the terminal type; and
      the process of returning the routing information of the called switching unit by the database server to the calling switching unit includes:
         ordering, by the HLR, the calling switching unit to trigger and put through an IN service to the home SCP of the called terminal; and
         triggering and putting through the IN service by the calling switching unit to the SCP;
         returning, by the SCP, the routing information of the called switching unit connected by the called terminal to the calling switching unit based on the stored relationship in the SCP between the called terminal and the routing information of the called switching unit connected by the called terminal.

The relationship between the terminal ID and the terminal type is determined by whether the terminal corresponding to the terminal ID has subscribed to an IN service.

The process of determining the relationship between the terminal ID and terminal type by whether the terminal corresponding to the terminal ID has subscribed to an IN service includes:
if the terminal corresponding to the terminal ID has subscribed to an IN service, the terminal corresponding to the terminal ID is a fixed terminal; and
if the terminal corresponding to the terminal ID hasn't subscribed to any IN service, the terminal corresponding to the terminal ID is a mobile terminal.

The routing information includes preset routing prefix of the called switching unit, or a combination of the preset routing prefix of the called switching unit and the called terminal ID.

The calling switching unit is a Gateway Mobile Switching Center, GMSC, of the mobile communication network, or a Mobile Switching Center, MSC, of the mobile communication network; and
the called switching unit is an MSC in the mobile communication network, or a switch which has connected the mobile communication network.

The method further includes:
modifying the relationship between the terminal ID and the terminal type; and
the process of determining by the database server whether the called terminal is a fixed terminal based on the relationship between the terminal ID and terminal type includes:
   determining, by the database server, the called terminal is a fixed terminal based on the modified relationship between the terminal ID and the terminal type.

It can be seen from the fore-going technical scheme that,, a database server reveals whether the called terminal is a fixed terminal or not and the routing information of the switching unit connected by the fixed terminal. The calling switching unit, on receipt of a call initiated to the called terminal, triggers and puts through the call to the database server. The database server determines that the called terminal is a fixed terminal based on stored terminal information, and provides the calling switching unit with the routing information of the called switching unit connected by the fixed terminal. The calling switching unit initiates a call to the called terminal via the called switching unit based on the routing information provided by the database server, so that the fixed terminal can be connected via the mobile communication network, and the processes for calling a fixed terminal via a mobile communication network can be better improved, and a better implementation mode is provided to improve the mobile service operator to an integrative service operator. In comparison with the case of simultaneously operating a fixed communication network and a mobile communication network, by adopting the system and method provided by embodiments of the present invention, the reconstruction for the existing mobile communication network is simple and the requirements for cooperation between network entities are low. Besides, the method provided by embodiments of the present invention allows an operator to be able to provide groups or person with complete communication services, and at the same time provide services for connecting a fixed terminal and a mobile terminal, thus the problems that groups or person must contact with different operators in order to perform fixed communication and mobile communication can be well solved.

Further, if the terminal information stored in the database server relates to a relationship between terminal ID and terminal type, the terminal type corresponding to the terminal ID may be modified according to requirements of a user with no influence on the entire call process. Therefore, the conversion of the identical terminal ID from the fixed terminal to the mobile terminal may be well done according to the user's requirements.

### Brief Description of the Drawings

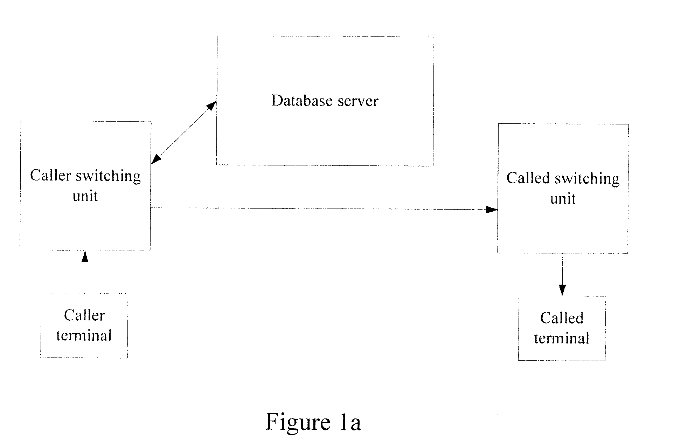

Figure 1a is a schematic illustrating a structure of a system for calling a fixed terminal via a mobile communication network in accordance with an embodiment of the present invention.
Figure 1 b is a flowchart for calling a fixed terminal via a mobile communication network in accordance with an embodiment of the present invention.
Figure 2a is a schematic illustrating a structure of a system for calling a fixed terminal via a mobile communication network in accordance with embodiment 1 of the present invention.
Figure 2b is a flowchart for calling a fixed terminal via a mobile communication network in accordance with embodiment 1 of the present invention.
Figure 3a is a schematic illustrating a structure of a system for calling a fixed terminal via a mobile communication network in accordance with embodiment 2 of the present invention.
Figure 3b is a flowchart for calling a fixed terminal via a mobile communication network in accordance with embodiment 2 of the present invention.
Figure 4a is a schematic illustrating a structure of a system for calling a fixed terminal via a mobile communication network in accordance with embodiment 3 of the present invention.
Figure 4b is a flowchart for calling a fixed terminal via a mobile communication network in accordance with embodiment 3 of the present invention.

### Embodiments of the Invention

A further detailed description is hereinafter given to this invention with reference to embodiments and accompanying drawings.

Figure 1a is a schematic illustrating a structure of a system for calling a fixed terminal via a mobile communication network in accordance with an embodiment of the present invention. As shown in Figure 1a, the system for calling a fixed terminal via a mobile communication network includes a calling terminal, a calling switching unit, a database server, a called terminal and a called switching unit, in which the called terminal is a fixed terminal.

The calling terminal initiates a call to the calling switching unit The destination of the call is the called terminal. The calling switching unit routes the call to the database server. The database server determines whether the called terminal is a fixed terminal based on the stored relationship between the terminal ID and the terminal type. If the called terminal is determined to be a fixed terminal, the database server returns the routing information of the called switching unit to the calling switching unit based on a stored relationship therein between the fixed terminal and the routing information of the called switching unit connected by the fixed terminal. The calling switching unit puts through the call to the called switching unit based on the routing information of the called switching unit. The called switching unit initiates a call to the called terminal.

The involved call to the fixed terminal includes the general direct call and the call forwarded by other terminals to the corresponding fixed terminal. If the calling terminal is a terminal of other networks, or the call is forwarded to the mobile communication network by other networks, the call will firstly be put through to the Gateway Mobile Switching Center (GMSC) in the mobile communication network. Therefore the calling switching unit described above may be a GMSC in the mobile communication network, or a Mobile Switching Center (MSC) in the mobile communication network. The called switching unit described above may be an MSC in the mobile communication network, or other switches connected in the mobile communication network.

The database server may be the HLR of the called terminal, or the Service Control Point (SCP) in the home Intelligent Network (IN) of the called terminal, or a combination of the HLR and SCP of the called terminal.

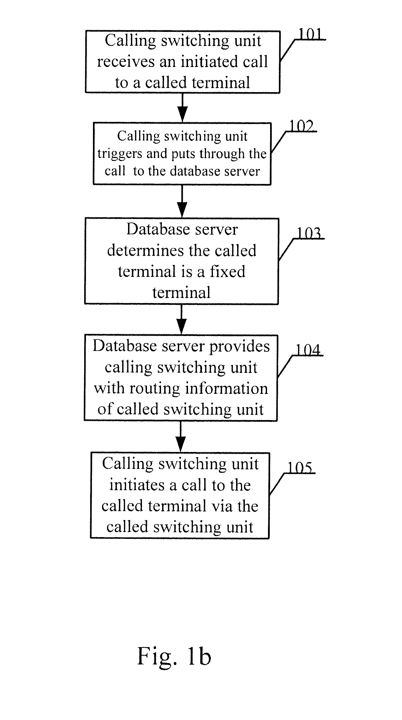

Figure 1b is a flowchart for calling a fixed terminal via a mobile communication network in accordance with an embodiment of the present invention. As shown in Figure 1b, the database server stores the relationship between the terminal ID and the terminal type, and the relationship between the fixed terminal and the routing information of the called switching unit connected by the fixed terminal. The process for calling a fixed terminal via a mobile communication network includes the following blocks.

Blocks 101-102: on receipt of an initiated call to a called terminal, a calling switching unit triggers as well as puts through the call to a database server, and provides the database server with the called terminal ID.

Block 103: the database server determines the called terminal is a fixed terminal based on the stored relationship between the terminal ID and the terminal type. The determination of the stored relationship is specifically as follows. The relationship between the terminal ID and the terminal type may be determined based on some fragmented number information in the terminal ID, for example, whether the called terminal is a fixed terminal may be determined based on the first and second digits in the terminal ID. Specifically, if the first and second digits in the terminal ID are not "13", the terminal type corresponding to the terminal ID is a fixed terminal. If the first and second digits in the terminal ID are "13", the terminal type corresponding to the terminal ID is a mobile terminal. Alternatively, whether the called terminal is a fixed terminal may also be determined based on the length of terminal ID. Specifically, if the length of the terminal ID is not 11 digits, the terminal type corresponding to the terminal ID is fixed terminal, if the length of the terminal ID is 11 digits, the terminal type corresponding to the terminal ID is mobile terminal. Alternatively, the relationship between the terminal ID and the terminal type may also be determined based on the combination of some fragmented number information in the terminal ID and the length of the terminal ID. Specifically, if fragmented number information and length of a terminal ID are both in line with that of a fixed terminal, the terminal type corresponding to the terminal ID is a fixed terminal, otherwise, the terminal type corresponding to the terminal ID is a mobile terminal. Alternatively, the determination of the stored relationship between the terminal ID and the terminal type can also be achieved as follows. For example, whether the called terminal is a fixed terminal may be determined based on the IN service subscription information. Specifically, if a terminal ID has subscribed to some intelligent service, the terminal type corresponding to the terminal ID is a fixed terminal. If a terminal ID hasn't subscribed to any IN service, the terminal type corresponding to the terminal ID is a mobile terminal. The relationship may also be determined based on any combination of the two described above.

Block 104: the database server provides the calling switching unit the routing information of the called switching unit based on the pre-stored relationship between the fixed terminal and routing information of the called switching unit connected by the fixed terminal. The routing information may be the preset routing prefix of the called switching unit, or a combination of the routing prefix of the called switching unit and the terminal ID of the called terminal. The preset routing prefix of the called switching unit may generally be numbers.

Block 105: the calling switching unit puts through the call to the called switching unit based on the routing information provided by the database server, and then the called switching unit initiates a call to the called fixed terminal based on the called terminal ID.

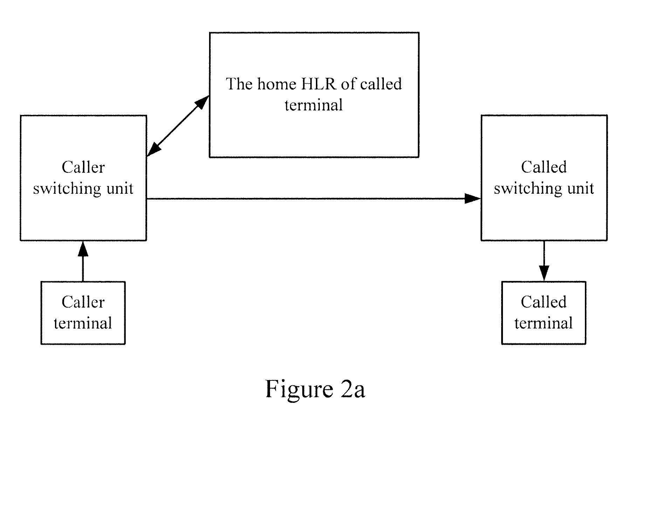

Figure 2a is a schematic illustrating a structure of a system for calling a fixed terminal via a mobile communication network in accordance with embodiment 1 of the present invention. As shown in Figure 2a, the system structure in this embodiment is roughly the same as that shown in Figure 1a, and the difference is that the database server is defined as an HLR in this embodiment. The process for calling a fixed terminal via a mobile communication network in this embodiment is given below.

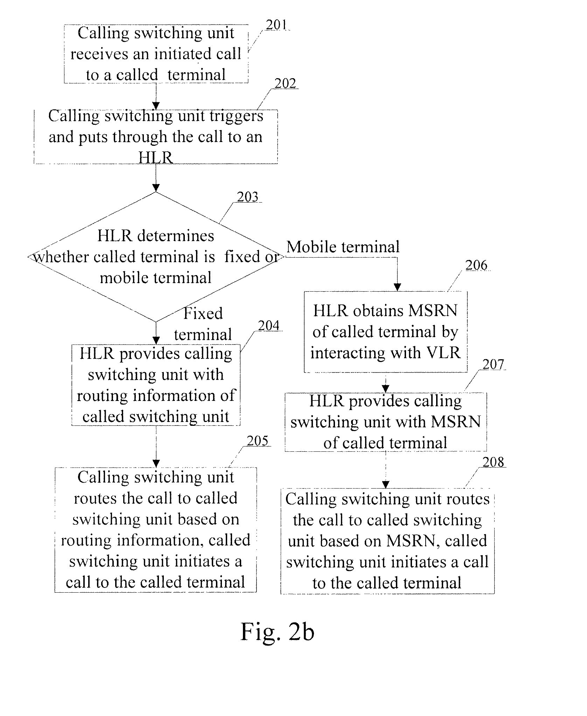

Figure 2b is a flowchart for calling a fixed terminal via a mobile communication network in accordance with embodiment 1 of the present invention. As shown in Figure 2b, the database server is an HLR which stores a relationship between terminal ID and terminal type, and a relationship between fixed terminal and routing information of called switching unit connected by the fixed terminal. The process for putting through a call via a mobile communication network includes the following blocks.

Blocks 201-202: on receipt of an initiated call to a called terminal, a calling switching unit triggers as well as puts through the call to an HLR, and provides the HLR with the called terminal ID.

Block 203: the HLR determines whether the called terminal is a fixed terminal or a mobile terminal based on the stored relationship between terminal ID and terminal type. If the HLR determines the called terminal is a fixed terminal, block 204 will be performed. If the HLR determines the called terminal is a mobile terminal, block 206 will be performed. The determination of the relationship is based on the process as follows. Whether the called terminal is a fixed terminal or a mobile terminal may be determined based on some fragmented number information in the terminal ID. Alternatively, whether the called terminal is a fixed terminal or a mobile terminal may be determined based on the length of the terminal ID. Alternatively, whether the called terminal is a fixed terminal or a mobile terminal may be determined based on the combination of the fragmented number information in the terminal ID and the length of the terminal ID.

Blocks 204-205: the HLR provides the routing information of the called switching unit for the calling switching unit, based on the pre-stored relationship between the fixed terminal and routing information of the called switching unit connected by the fixed terminal. The calling switching unit routes the call to the called switching unit based on the routing information provided by the HLR. And then the called switching unit initiates a call to the called fixed terminal based on the called terminal ID and terminates the call initiation process. The above routing information may be preset routing prefix of the called switching unit, or a combination of the routing prefix of the called switching unit and the called fixed terminal ID.

Blocks 206-208: the HLR requests the VLR of the called mobile terminal to provide an MSRN. The VLR temporarily assigns an MSRN to the called mobile terminal, and returns that assigned MSRN to the HLR. The HLR provides the calling switching unit with the received MSRN of the called mobile terminal. The calling switching unit routes the call to the called switching unit based on the received MSRN. The called switching unit obtains the corresponding called mobile terminal ID from the VLR based on the MSRN, and then initiates a call to the called mobile terminal based on the obtained called mobile terminal ID.

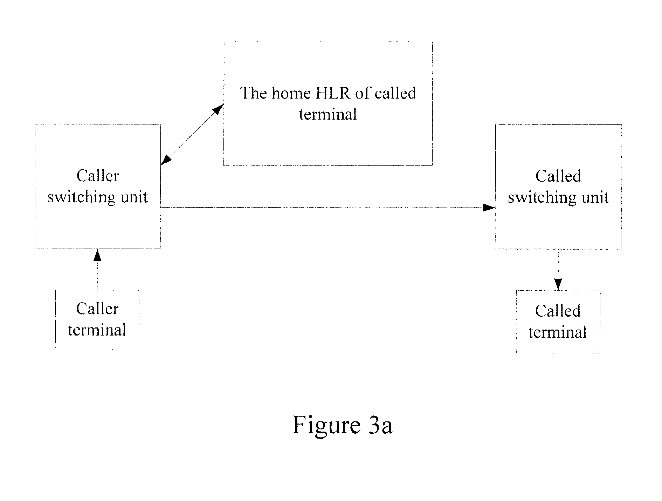

Figure 3a is a schematic illustrating a structure of a system for calling a fixed terminal via a mobile communication network in accordance with embodiment 2 of the present invention. As shown in Figure 3a, the system structure in this embodiment is roughly the same as that shown in Figure 1a, and the difference is that the database server is defined as the home SCP of the called terminal in this embodiment. The process for calling a fixed terminal via a mobile communication network in this embodiment is given below.

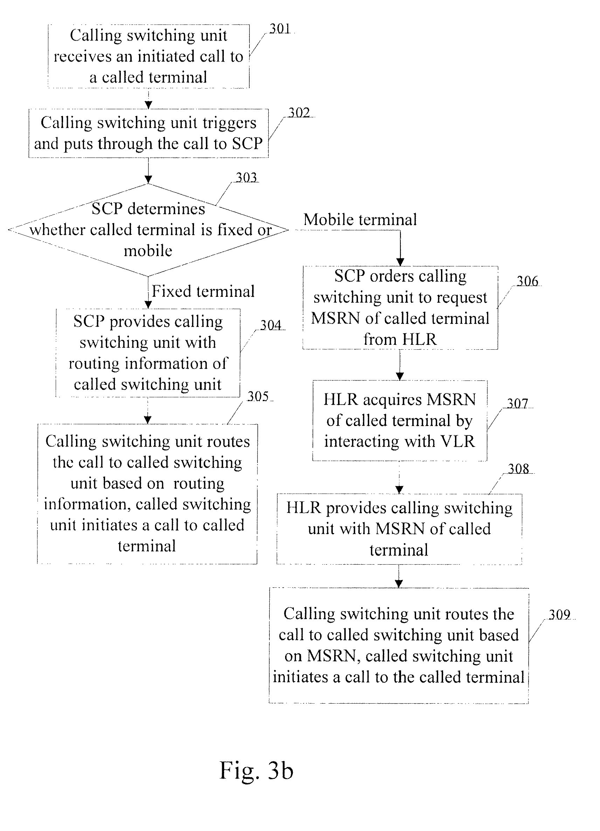

Figure 3b is a flowchart for calling a fixed terminal via a mobile communication network in accordance with embodiment 2 of the present invention. As shown in Figure 3b, the database server is an SCP which stores a relationship between terminal ID and terminal type, and a relationship between a fixed terminal and routing information of a switching unit connected by the fixed terminal. The process for putting through a call via a mobile communication network includes the following blocks.

Blocks 301-302: on receipt of a call initiated to a called terminal, a calling switching unit triggers and puts through the call to the home SCP of the called terminal, and provides the SCP with the called terminal ID. The calling switching unit may trigger and put through an IN service to the home SCP of the called terminal based on the called terminal ID, e.g., some fragmented number information of the called terminal ID.

Block 303: the SCP determines whether the called terminal is a fixed terminal or a mobile terminal based on the stored relationship between the terminal ID and the terminal type. If the SCP determines the called terminal is a fixed terminal, block 304 will be performed. If the SCP determines the called terminal is a mobile terminal, block 306 will be performed. The determination of the relationship is based on the process as follows. Whether the called terminal is a fixed terminal or a mobile terminal may be determined based on some fragmented number information in the terminal ID. Alternatively, whether the called terminal is a fixed terminal or a mobile terminal may be determined based on length of the terminal ID. Alternatively, whether the called terminal is a fixed terminal or a mobile terminal may be determined based on the combination of some fragmented number information in the terminal ID and the length of the terminal ID.

Blocks 304-305: the SCP provides the calling switching unit based on the pre-stored relationship between the fixed terminal and the routing information of the called switching unit connected by the fixed terminal with the routing information of the called switching unit. The calling switching unit routes the call to the called switching unit based on the routing information provided by the SCP. And the called switching unit initiates a call to the called fixed terminal based on the called terminal ID and then terminates the call initiation process. The routing information may be the routing prefix of the called switching unit, or a combination of the routing prefix of the called switching unit and the terminal ID of the called terminal.

Blocks 306-309: the SCP orders the calling switching unit to request the MSRN of the called mobile terminal from the HLR of the called mobile terminal. The HLR requests the VLR of the called mobile terminal to provide the MSRN. The VLR temporarily assigns an MSRN to the called mobile terminal, and returns the assigned MSRN to the HLR. The HLR provides the calling switching unit with the received MSRN of the called mobile terminal. The calling switching unit routes the call to the called switching unit based on the received MSRN. The called switching unit obtains the corresponding called mobile terminal ID from the VLR based on the MSRN, and then initiates a call to the called mobile terminal based on the obtained called mobile terminal ID.

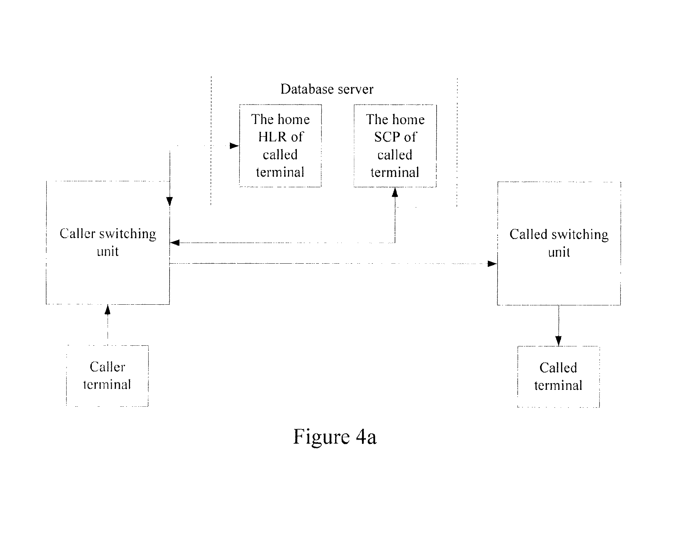

Figure 4a is a schematic illustrating a structure of a system for calling a fixed terminal via a mobile communication network in accordance with embodiment 3 of the present invention. As shown in Figure 4a, the system structure in this embodiment is roughly the same as that shown in Figure 1a, and the difference is that the database server is defined as an HLR and the home SCP of the called terminal in this embodiment. The process for calling a fixed terminal via a mobile communication network in this embodiment is given below.

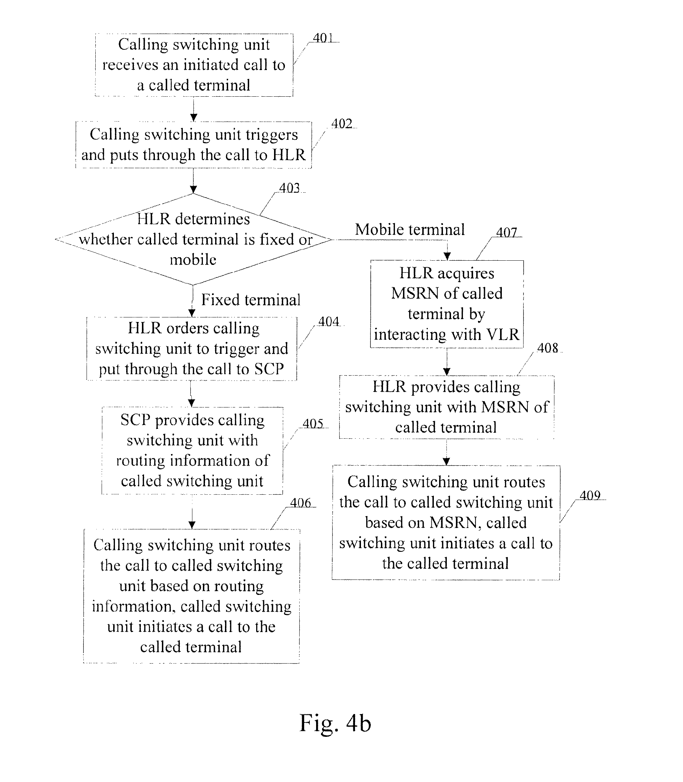

Figure 4b is a flowchart for calling a fixed terminal via a mobile communication network in accordance with embodiment 3 of the present invention. As shown in Figure 4b, the database server is the HLR of the called terminal and the SCP of the called terminal. The HLR stores the relationship between terminal ID and terminal type. The SCP stores the relationship between the fixed terminal and the routing information of the switching unit connected by the fixed terminal. The process for putting through a call via a mobile communication network includes the following blocks.

Blocks 401-402: on receipt of an initiated call to a called terminal, a calling switching unit triggers as well as puts through the call to the HLR, and provides the HLR with the called terminal ID.

Block 403: the HLR determines whether the called terminal is a fixed terminal or a mobile terminal based on the stored relationship between the terminal ID and the terminal type. If the HLR determines the called terminal is a fixed terminal, block 404 will be performed. If the HLR determines the called terminal is a mobile terminal, block 407 will be performed. The determination of the relationship is based on the process as follows. Whether the called terminal is a fixed terminal or a mobile terminal may be determined based on the IN service subscription information of the called terminal corresponding to the terminal ID. Specifically, if the terminal has subscribed to an IN service, the terminal is determined to be a fixed terminal. If the terminal has not subscribed to any IN service, the terminal is determined to be a mobile terminal.

Blocks 404-406: the HLR orders the calling switching unit to trigger and put through the IN service to the home SCP of the called fixed terminal. The calling switching unit triggers and puts through the IN service to the home SCP of the called fixed terminal. The SCP provides the calling switching unit with the routing information of the called switching unit based on the pre-stored relationship between the fixed terminal and the routing information of the called switching unit connected by the fixed terminal. The calling switching unit routes the call to the called switching unit based on the routing information provided by the SCP. And then the called switching unit initiates a call to the called fixed terminal based on the called terminal ID and terminates the call initiation process. The above routing information may be the preset routing prefix of the called switching unit, or a combination of the routing prefix of the called switching unit and the terminal ID of the called terminal.

Blocks 407-409: the HLR requests the VLR of the called mobile terminal to provide the MSRN. The VLR temporarily assigns the MSRN to the called mobile terminal, and returns the assigned MSRN to the HLR. The HLR provides the calling switching unit with the received MSRN of the called mobile terminal. The calling switching unit routes the call to the called switching unit based on the received MSRN. The called switching unit obtains the corresponding called mobile terminal ID from the VLR based on the MSRN, and then initiates a call to the called mobile terminal based on the obtained called mobile terminal ID.

The preferred embodiments of the present invention may be modified appropriately during specific implementation to meet the detailed requirements of specific cases. It is thereby understood that the specific embodiments described in this disclosure are demonstrative rather than limiting the protection scope of the present invention.

## Claims

1. A system for calling a fixed terminal via a mobile communication network, comprising a calling terminal, a called terminal, a calling switching unit, a called switching unit and a database server, wherein the called terminal is a fixed terminal;
the calling switching unit, configured to trigger and put through a call initiated to the called terminal from the calling terminal to the database server, put through the call to the called switching unit based on routing information of the called switching unit;
the database server, configured to determine the called terminal is a fixed terminal based on a stored relationship between terminal Identification, ID, and terminal type, and after determining the called terminal is a fixed terminal, configured to return routing information of the called switching unit to the calling switching unit based on a stored relationship between the fixed terminal and routing information of the called switching unit connected by the fixed terminal; and
the called switching unit, configured to initiate a call to the called terminal.

2. The system of claim 1, wherein the calling switching unit is a Gateway Mobile Switching Center, GMSC, in the mobile communication network, or a Mobile Switching Center, MSC, in the mobile communication network; the called switching unit is an MSC in the mobile communication network, or a switch which connects the mobile communication network.

3. The system of claim 1 or claim 2, wherein the database server is a Home Location Register, HLR, of the called terminal.

4. The system of claim 1 or claim 2, wherein the database server is a Service Control Point, SCP, in the home Intelligent Network, IN, of the called terminal.

5. The system of claim 1 or claim 2, wherein the database server comprises an HLR of the called terminal and an SCP in the home IN of the called terminal;
the HLR of the called terminal, configured to order the calling switching unit to trigger and put through the call to the home SCP of the called terminal after determining that the called terminal is a fixed terminal based on the stored relationship between the terminal ID and terminal type; and
the home SCP of the called terminal, configured to return the routing information of the called switching unit to the calling switching unit based on the stored relationship between the fixed terminal and the routing information of the called switching unit connected by the fixed terminal.

6. The system of claim 1, wherein the routing information comprises preset routing prefix of the called switching unit, or a combination of the preset routing prefix of the called switching unit and the called terminal ID.

7. A method for calling a fixed terminal via a mobile communication network, comprising:
triggering and putting through the call to a database server, by a calling switching unit, on receipt of a call initiated to a called terminal;
after determining that the called terminal is a fixed terminal based on a stored relationship between terminal identification, ID, and terminal type, returning to the calling switching unit, by the database server, routing information of the called switching unit connected by the called terminal based on a relationship stored in the database server between the called terminal and routing information of the called switching unit accessed by the called terminal;
putting through the call to the called switching unit by the calling switching unit based on the routing information of the called switching unit returned by the database serve; and
initiating a call to the called terminal, by the called switching unit.

8. The method of claim 7, wherein the database server is the Home Location Register, HLR, of the called terminal.

9. The method of claim 7, wherein the database server is the Service Control Point, SCP, in the home Intelligent Network, IN, of the called terminal, and
the process of triggering and putting through the call by the calling switching unit to the database server comprises:
triggering and putting through an IN service to the home SCP of the called terminal by the calling switching unit based on the called terminal ID carried in the call.

10. The method of claim 9, wherein the called terminal ID is fragmented number information of the called terminal ID.

11. the method of claim 8 or 9, wherein the relationship between the terminal ID and the terminal type is determined by the fragmented number information of the terminal ID.

12. The method of claim 11, wherein the process of determining the relationship between the terminal ID and the terminal type by the fragmented number information of the terminal ID comprises: if the fragmented number information of the terminal ID is in line with a preset rule for fragmented number of the fixed terminal, the terminal corresponding to the terminal ID is a fixed terminal; and
if the fragmented number information of the terminal ID isn't in line with preset rules for fragmented number of the fixed terminal, the terminal corresponding to the terminal ID is a mobile terminal.

13. The method of claim 8 or 9, wherein the relationship between the terminal ID and the terminal type is determined by length of the terminal ID.

14. The method of claim 13, wherein the process of determining the relationship between the terminal ID and the terminal type by length of the terminal ID comprises: if the length of the terminal ID is in line with a preset rule for length of the fixed terminal, the terminal corresponding to the terminal ID is a fixed terminal; and
if the length of the terminal ID isn't in line with preset rules for length of the fixed terminal, the terminal corresponding to the terminal ID is a mobile terminal.

15. The method of claim 8 or 9, wherein the relationship between the terminal ID and the terminal type is determined by a combination of the fragmented number information of the terminal ID and length of the terminal ID.

16. The method of claim 15, wherein the process of determining the relationship between the terminal ID and the terminal type by a combination of the fragmented number information in the terminal ID and length of the terminal ID comprises:
if length of the terminal ID is both in line with preset rules for the fragmented number and length of the fixed terminal ID, the terminal type corresponding to the terminal ID is a fixed terminal; and
if at least one of the fragmented number information and length of the terminal ID isn't in line with preset rules for the fragmented number and length of the fixed terminal ID, the terminal type corresponding to the terminal ID is a mobile terminal.

17. The method of claim 7, wherein the database server comprises the HLR of the called terminal and the home SCP of the called terminal;
the HLR stores the relationship between the terminal ID and the terminal type;
the SCP stores the relationship between the called terminal and the routing information of the called switching unit connected by the called terminal; and
the process of triggering and putting through the call by the calling switching unit to the database server comprises:
triggering and putting through the call by the calling switching unit to the HLR;
the process of determining by the database server the called terminal is a fixed terminal comprises:
determining, by the HLR, whether the called terminal is a fixed terminal based on the stored relationship between the terminal ID and the terminal type; and
the process of returning the routing information of the called switching unit by the database server to the calling switching unit comprises:
ordering, by the HLR, the calling switching unit to trigger and put through an IN service to the home SCP of the called terminal; and
triggering and putting through the IN service by the calling switching unit to the SCP;
returning, by the SCP, the routing information of the called switching unit connected by the called terminal to the calling switching unit based on the stored relationship in the SCP between the called terminal and the routing information of the called switching unit connected by the called terminal.

18. The method of claim 17, wherein the relationship between the terminal ID and the terminal type is determined by whether the terminal corresponding to the terminal ID has subscribed to an IN service.

19. The method of claim 18, wherein the process of determining the relationship between the terminal ID and terminal type by whether the terminal corresponding to the terminal ID has subscribed to an IN service comprises:
if the terminal corresponding to the terminal ID has subscribed to an IN service, the terminal corresponding to the terminal ID is a fixed terminal; and
if the terminal corresponding to the terminal ID hasn't subscribed to any IN service, the terminal corresponding to the terminal ID is a mobile terminal.

20. The method of claim 7, wherein the routing information comprises preset routing prefix of the called switching unit, or a combination of the preset routing prefix of the called switching unit and the called terminal ID.

21. The method of claim 7, wherein the calling switching unit is a Gateway Mobile Switching Center, GMSC, of the mobile communication network, or a Mobile Switching Center, MSC, of the mobile communication network; and
the called switching unit is an MSC in the mobile communication network, or a switch which has connected the mobile communication network.

22. The method of claim 7, further comprising:
modifying the relationship between the terminal ID and the terminal type; and
the process of determining by the database server whether the called terminal is a fixed terminal based on the relationship between the terminal ID and terminal type comprises:
determining, by the database server, the called terminal is a fixed terminal based on the modified relationship between the terminal ID and the terminal type.
